# EUROPÄISCHE PATENTANMELDUNG

(11) **EP 3 534 470 A1**
(43) Veröffentlichungstag der Anmeldung: **04.09.2019**
(21) Anmeldenummer: 18159521.6
(22) Anmeldetag: 01.03.2018
(51) Int. Cl.: H02B 3/00, H01R 43/28, H01B 13/34, H01B 7/36

(54) **VERFAHREN ZUR VERDRAHTUNG ZWEIER ANSCHLUSSPUNKTE EINER ELEKTRISCHEN MONTAGEANORNDUNG MIT EINER TEILWEISE VORKONFEKTIONIERTE ELEKTRISCHE LEITUNG**

(71) Anmelder: Hanzel, Sven, 37242 Bad Sooden-Allendorf (DE)
(72) Erfinder: Hanzel, Sven, 37242 Bad Sooden-Allendorf (DE)
(74) Vertreter: Specht, Peter

(57) **Zusammenfassung**

Ein Verfahren zur Verdrahtung zweier Anschlusspunkte einer elektrischen Montageanordnung, mit den folgenden Schritten:
a) Bereitstellen (100), insbesondere Anlieferung an den Ort an welchem die zwei Anschlusspunkte der elektrischen Montageanordnung verdrahtet werden sollen, einer teilweise vorkonfektionierten Leitung (101) umfassend
die Leitung (101), sowie
einen ersten Kennzeichnungsträger (103) zur Kennung eines ersten von zwei Anschlusspunkten;
eine Kennzeichnung (106) an oder auf der Leitung (101) umfassend Informationen zur Erstellung eines zweiten Kennzeichnungsträgers (107) zur Kennung eines zweiten der zwei Anschlusspunkte;

b) Ablängen (200) der teilweise vorkonfektionierten Leitung (101), unter Ausbildung einer ersten elektrischen Leitung (104) und einer zweiten elektrischen Leitung (105) zur Anordnung in der elektrischen Montageanordnung;
c) Auslesen (300) der Informationen der Kennzeichnung (106) durch eine Auslesevorrichtung (109) und Erstellen des zweiten Kennzeichnungsträgers (107) zur Kennung des zweiten Anschlusspunkts;
d) Applikation (400) des zweiten Kennzeichnungsträgers (107) an oder auf die zweite elektrische Leitung (105) zur Anordnung in der elektrischen Montageanordnung; sowie
eine teilweise vorkonfektionierte Leitung und eine Verwendung.

## Beschreibung

Die vorliegende Erfindung betrifft ein Verfahren zur Verdrahtung zweier Anschlusspunkte einer elektrischen Montageanordnung nach dem Oberbegriff des Anspruchs 1 und teilweise vorkonfektionierte elektrische Leitung nach dem Oberbegriff des Anspruchs 11, sowie deren Verwendung in einem Bündel.

Als Stand der Technik ist beispielsweise die DE 44 00 824 A1 zu nennen. Hier erfolgt eine Längenmessung eines Leiters, beispielsweise eines Lichtwellenleiters, aber auch eines Erd- oder Phasenseils und eine Markierung des Leiters in diskreten Abschnitten, z.B. alle 10 cm, beispielsweise durch Ringwellungen. Eine teilweise vorkonfektionierte Leitung im Sinne der vorliegenden Erfindung liegt nicht vor. Ebenso ist keine Information zur Erstellung Kennzeichnungsträgers zur Kennung eines Anschlusspunktes vorgesehen. Die Längenmessung selbst erfolgt durch Zählung der Markierungseinheiten innerhalb eines bestimmten Zeitintervalls durch eine Recheneinheit CP.

Weiterhin als Stand der Technik ist die DE 198 14 540 A1 mit einer Vielzahl aufeinanderfolgender insbesondere äquidistanter Datenträger, wie sie in Fig. 2 dieser Druckschrift dargestellt sind. Die DE 109 14 540 A1 beruht auf der Idee, dass die Datenträger beim Ablängen der Leitung mit abgetrennt werden, wobei allerdings bei einer Trommellösung eine riesige Zahl von Datenträger notwendig wäre, was ein hoher Verbrauch und Fertigungsaufwand beinhaltet.

Die WO 2015/142151 A1 offenbart eine Kabeltrommel auf welcher eine Initiallänge al Etikett vorgesehen ist. Jedes Mal vor dem Abrollen einer Teillänge wird die Gesamtlänge eingescannt und der aktuelle Kabelverbrauch wird abgerufen. Sodann wird die Abrolllänge ermittelt und als aktueller Kabelverbrauch hinterlegt.

Die DE 199 39 638 A1 offenbart ein Verfahren zur Vorkonfektionierung eines Kabels. Dabei wird lediglich eine Seite des Kabels vorkonfektioniert. Eine solche Vorkonfektionierung kann trotz der Behauptung einer "eindeutigen Kennzeichnung" zu einer uneindeutigen Zuordnung führen, wie sich aus dem Beispiel der Fig. 8 ergibt. Eine solche Ausgangssituation wurde in der DE 199 39 638 A1 weder als Problem identifiziert noch gelöst.

Das Verdrahten von elektrischen Montageanordnung ist typischerweise eine sehr zeitaufwändige Tätigkeit. Aus einem Schaltplan oder aus einer Verbindungsliste müssen die Kennungen von Verbindungsstellen abgelesen werden, die miteinander durch Leitungen verbunden werden sollen. Weiterhin müssen die technischen Eigenschaften der zu verwendenden Leitungen ermittelt werden, insbesondere Leitungstyp, Querschnitt und Farbe, sowie entsprechend der technischen Eigenschaften der Verbindungspunkte die zu verwendenden Leitungsverbinder wie beispielsweise Stecker, Aderendhülse oder Kabelschuhe.

Sind alle Verbindungsstellen einer Verbindung sowie alle Eigenschaften der Leitung und Leitungsverbinder geklärt, beginnt für den Werker der Vorgang der Verkabelung. Er wählt aus einem ihm zur Verfügung gestellten Pool von Leitungen den richtigen Typ aus, ermittelt die benötigte Länge in der elektrischen Montageanordnung, bringt an den Leitungsenden die korrekten Leitungsverbinder an und baut die Leitung ein.

Manchmal ist es erforderlich, dass die verbaute Leitung mit sogenannten Kennzeichnungsträgern versehen werden muss. Diese können Beispielsweise, jeweils am Anfang und am Ende der Leitung angebracht, die Kennung der Anschlusspunkte tragen.

Eine erhebliche Erleichterung stellt es dar, wenn der Werker Leitungen zur Verfügung gestellt bekommt, bei denen einige der oben beschriebenen Tätigkeiten bereits vollzogen sind. Man spricht von vorkonfektionierten Leitungen. Idealerweise besteht eine vorkonfektionierte Leitung aus der Leitung selbst im richtigen Typ, in der richtigen Farbe, in der richtigen Länge, sie trägt an jedem Ende den passenden Leitungsverbinder, und an jedem Ende einen Kennzeichnungsträger, der die Kennung der Verbindungsstelle in der elektrischen Montageanordnung angibt. Ist die Leitung in dieser Weise vorkonfektioniert benötigt der Werker wenig bis keine zusätzliche Dokumentation für das richtige legen der Leitung in der elektrischen Montageanordnung.

Die Informationen über Typ der Leitung, Farbe und Querschnitt, über den richtigen Leitungsverbinder und die Kennung der Anschlusspunkte, die auf einem Kabelmarkierer aufgebracht werden soll, lassen sich im Vorfeld leicht gewinnen, denn sie ergeben sich aus einem vollständig gezeichneten Schaltplan.

Schwieriger ist es, im Vorfeld die Länge einer einzubauenden Leitung zu kennen, denn dafür müsste zusätzlich zum Schaltplan ein sogenannter Aufbauplan erstellt werden, der die Abmessungen und Abstände der elektrischen Komponenten im Raum bestimmt. Da das Erzeugen eines solchen dreidimensionalen Aufbauplans aufwändig ist, wird dies häufig noch unterlassen.

Um trotz fehlender Längen die Vorteile vorkonfektionierter Leitungen nutzen zu können behilft man sich manchmal einer Methode, bei der die Leitungen nicht vollständig, sondern nur auf einer Seite konfektioniert werden. So bekommt der Werker Leitungen, die beispielsweise bereits einseitig einen Leitungsverbinder tragen, im richtigen Typ und in richtiger Farbe ausgeführt sind, und bereits mit einem oder mehreren Kennzeichnungsträgern versehen sind, die dem Werker die Information über die richtige Verbindungsstelle in der elektrischen Montageanordnung, insbesondere in einem Schaltschrank oder einer Schaltschrankpartition, geben. Die Leitung selbst ist dann etwas zu lang zugeschnitten, und die zweite Seite trägt noch keinen Leitungsverbinder.

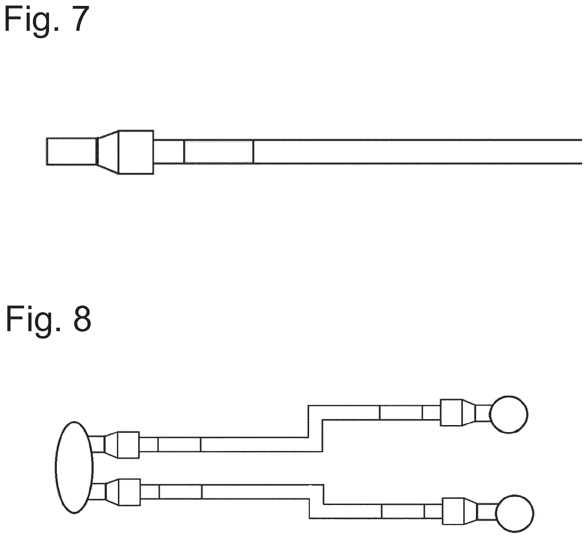

Problematisch wird es, wenn die Kennzeichnungsträger fest mit dem Kabel verbunden sind, z.B. als Klebeschilder oder in Kombination mit Kabelmanschetten, wie sie in Fig. 7 dargestellt sind. Dann können sie nicht im Vorfeld auf der Leitung angebracht werden, denn sie würden unter Umständen beim Einkürzen der Leitungen mit abgeschnitten werden. Sie müssen beim Vervollständigen der unkonfektionierten Enden mit angebracht werden, was für den Werker einen zusätzlichen, fehleranfälligen Arbeitsgang bedeutet.

Die Schwierigkeit besteht darin, einer Leitung eindeutig einen Kennzeichnungsträger zuzuordnen. Eine Leitung ist beispielsweise dadurch eindeutig gekennzeichnet, dass auf ihr die Kennungen aller Anschlusspunkte angegeben sind. Im Falle der nicht vollständig konfektionierten Leitung fehlt aber mindestens eine Kennung, womit sich unter Umständen einige Leitungen nicht ohne weitere Informationen eindeutig identifizieren lassen.

Diese Problemstellung ist in Fig. 8 anhand einer sogenannten Doppelbelegung grafisch dargestellt. Die beiden hier dargestellten Leitungen sind verwechlungsfähig, da die Schilder zur Kennung der Anschlusspunkte B und C erst nachträglich angebracht werden, fehlt dem Werker die Information welches der beiden Kabel den Anschlusspunkt A-B und welches Kabel den Anschlusspunkt A-C verbinden soll.

Ausgehend von der vorgenannten Problemstellung ist es die Aufgabe der vorliegenden Erfindung die Gefahr einer Fehlverdrahtung von teilweise vorkonfektionierten Leitungen weiter zu verringern.

Die vorliegende Erfindung löst diese Aufgabe durch das Bereitstellen eines Verfahrens mit den Merkmalen des Anspruchs 1. Darüber hinaus wird eine teilweise vorkonfektionierte Leitung mit den Merkmalen des Anspruchs 9 beschrieben, mittels welcher das erfindungsgemäße Verfahren durchführbar ist.

Ein erfindungsgemäßes Verfahren zur Verdrahtung zweier Anschlusspunkte einer elektrischen Montageanordnung umfasst die folgenden Schritte:
a) Bereitstellen einer teilweise vorkonfektionierten Leitung, umfassend die elektrische Leitung und
   einen ersten Kennzeichnungsträger zur Kennung eines ersten von zwei Anschlusspunkten;
   eine Kennzeichnung an oder auf der Leitung umfassend Informationen zur Erstellung eines zweiten Kennzeichnungsträgers zur Kennung eines zweiten der zwei Anschlusspunkte und/oder zur Zuordnung eines passenden Leitungsverbinders;

Die Vorkonfektionierung erfolgt im Rahmen des erfindungsgemäßen Verfahrens vorzugsweise werksseitig, während das erfindungsgemäße Verfahren selbst bevorzugt am Ort der Montage der Leitung, also bei der zu verkabelnden elektrischen Montageanordnung, z.B. dem Schaltschrank, erfolgt.
b) Ablängen der elektrischen Leitung unter Ausbildung einer ersten elektrischen Leitung und einer zweiten elektrischen Leitung zur Anordnung in der elektrischen Montageanordnung, wobei die erste elektrische Leitung die Kennzeichnung trägt,

Die zweite elektrische Leitung dient der Anordnung in der elektrischen Montageanordnung. Sie weist die ideale Einbaulänge auf. Die erste elektrische Leitung kann idealerweise dabei bereits sowohl über einen ersten Kennzeichnungsträger zur Kennzeichnung des ersten Anschlusspunktes verfügen als auch über einen Leitungsverbinder mittels welchem die Leitung an den ersten Anschlusspunkt angeschlossen werden kann. Der erste Kennzeichnungsträger und der erste Leitungsverbinder müssen allerdings zwar nicht zwingend vorgesehen sein, allerdings ist die Verwechslungsgefahr beim Anschluss der Leitung bereits wesentlich durch die Anordnung zumindest eines dieser beiden Elemente welche dem Fachmann als Konfektionierung bekannt ist. Die einseitige Konfektionierung einer elektrischen Leitung vor deren Bereitstellung an einen Werker, also die Konfektionierung an einem Ende der Leitung wird im Rahmen der vorliegenden Erfindung als eine teilweise Vorkonfektionierung verstanden.

Die erste elektrische Leitung kann bevorzugt die Kennzeichnung mit Informationen zum Erstellen eines Kennzeichnungsträgers tragen. Dieser Kennzeichnungsträger kann idealerweise bei einer Leitung mit lediglich zwei Enden, die Kennung des zweiten Anschlusspunktes aufweisen.

Während also in einer bevorzugten Ausführungsvariante der Erfindung der erste Kennzeichnungsträger werksseitig vor der Auslieferung an einen Werker bei der Vorkonfektionierung angebracht wird, so wird der zweite Kennzeichnungsträger erst vor Ort, bei der Montage der elektrischen Leitung in der elektrischen Montageanordnung erstellt und an der Leitung angeordnet.

Dies erfolgt durch
c) Auslesen der Informationen der Kennzeichnung durch eine Auslesevorrichtung und
   c1 Erstellen des zweiten Kennzeichnungsträgers zur Kennung des zweiten Anschlusspunkts und/oder
   c2 Versehen der zweiten Leitung mit einem durch die Kennzeichnung vorgegebenen Leitungsverbinder;

Das Auslesen kann z.B. durch einen Barcodescanner erfolgen, sofern die Kennzeichnung als Barcode ausgebildet ist. Sodann kann ein Drucker das erstellen des Kennzeichnungsträgers vornehmen. Entsprechende Drucker sind an sich bekannt, beispielsweise von der Firma Partex.

Alternativ oder zusätzlich kann auch ein Versehen der zweiten Leitung mit einem durch die Kennzeichnung vorgegebenen Leitungsverbinder erfolgen.

Bei den Kennzeichnungsträgern für elektrische Leitungen gibt es vielfältige Ausgestaltungen. Neben adhäsiven Kennzeichnungsträgern haben sich insbesondere Kennzeichnungsträger als praktisch erwiesen welche die elektrische Leitung zumindest bereichsweise umgreifen. Diese können Markierungsschilder aufweisen, welche unmittelbar bedruckbar sind oder auf welche die Kennzeichnung, z.B. als Aufkleber oder als Einschiebeabschnitt in einem Sichtfenster gehalten wird.

Entsprechend erfolgt die
c) Applikation des Kennzeichnungsträgers an oder auf die zweite elektrische Leitung zur Anordnung in der elektrischen Montageanordnung.
je nach Ausgestaltung des Kennzeichnungsträgers.

Das vorliegende Verfahren hat den besonderen Vorteil, dass beim Ablängen der Leitung ein unbeabsichtigtes Abtrennen eines Kennzeichnungsträgers vermieden wird, da der Kennzeichnungsträger erst vor Ort erstellt wird.

Dabei befindet sich die Kennzeichnung auf der abgelängten ersten Leitung, welche typischerweise oft als Abfallprodukt angesehen wird. Diese meist kurzen Endabschnitte können allerdings hervorragend ausgelesen werden und sind aufgrund ihrer geringen Länge gut handhabbar.

Weitere vorteilhafte Ausgestaltungen der Erfindung sind Gegenstand der Unteransprüche.

Vorteilhafterweise erfolgt das Bereitstellen einer teilweise vorkonfektionierten elektrischen Leitung in Schritt a) durch ein Bereitstellen der Leitung mit einem ersten Kennzeichnungsträger zur Kennung eines ersten von zwei Anschlusspunkten, wobei die Kennzeichnung der Leitung Informationen zur Erstellung eines zweiten Kennzeichnungsträgers zur Kennung eines zweiten der zwei Anschlusspunkte umfasst.

Weiterhin weist die nach dem Ablängen in Schritt b) ausgebildete zweite elektrische Leitung den ersten Kennzeichnungsträger zur Anordnung in der elektrischen Montageanordnung auf.

Zudem erfolgt das Erstellen des zweiten Kennzeichnungsträgers zur Kennung des zweiten der zwei Anschlusspunkte anhand der ausgelesenen Informationen in Schritt c).

Die Applikation des zweiten Kennzeichnungsträgers erfolgt sodann auf die zweite elektrische Leitung, welche Anordnung in der elektrischen Montageanordnung in Schritt d) vorgesehen ist.

Die Kennzeichnung mit den Informationen zur Erstellung des zweiten Kennzeichnungsträgers zur Kennung des zweiten der zwei Anschlusspunkte kann vorteilhaft auf einem Wickeletikett angeordnet sein. Dies ermöglicht ein einfaches Abtrennen des Wickeletiketts von der abgelängten ersten Leitung, meist dem Abfallendstück, und ein Aufkleben auf einen Bogen. Zudem lassen sich solche Etiketten sehr einfach einscannen bzw. Erfassen.

Die Kennzeichnung mit den Informationen zur Erstellung des zweiten Kennzeichnungsträgers zur Kennung des zweiten der zwei Anschlusspunkte kann als ein Barcode und/oder einem QR-Code ausgebildet sein. Dadurch kann auf bekannte Auslesesysteme (Barcodescanner, Handy-Apps) beim Erfassen der vorgenannten Informationen zurückgegriffen werden.

Nach Schritt b), insbesondere nach Schritt d), kann eine Applikation des Leitungsverbinders, insbesondere eines Stecker, einer Aderendhülse und/oder eines Kabelschuhs, insbesondere am zweiten Ende der zweiten abgelängten Leitung. welche zur Anordnung in der elektrischen Montageanordnung vorgesehen ist, erfolgen.

Das Auslesen der Kennzeichnung kann durch einen berührungslosen Scan, vorzugsweise einem optischen Scan, erfolgen.

Zumindest einer der beiden Kennzeichnungsträger kann vorteilhaft zusätzlich zur Kennung der Anschlusspunkte auch Informationen hinsichtlich dem Leitungstyp, dem Querschnitt und/oder der Farbe der Leitung aufweisen. Im Fall des zweiten Kennzeichnungsträgers sind diese Informationen teil der Kennzeichnung, welche z.B. auf dem Wickeletikett vorgesehen sind.

Nach dem Auslesen der Informationen gemäß Schritt c) kann eine Information zu dem zu verwendenden Leitungsverbinder durch die Auslesevorrichtung erfolgen. Beispielsweise kann in einem Sichtfeld angezeigt werden welcher Leitungsverbinder an das zweite Ende der zweiten Leitung angebracht werden muss.

Weiterhin erfindungsgemäß ist eine teilweise vorkonfektionierte elektrische Leitung, insbesondere zur Verwendung in einem erfindungsgemäßen Verfahren, wobei die teilweise vorkonfektionierte Leitung an einem ersten Ende einen Leitungsverbinder zur Verbindung mit einem ersten Anschlusspunkt der elektrischen Montageanordnung aufweist und an einem zweiten Ende keinen Leitungsverbinder aufweist, dadurch gekennzeichnet, dass die Leitung in einem Endbereich des zweiten Endes eine Kennzeichnung umfassend Informationen zur Erstellung eines Kennzeichnungsträgers zur Kennung eines zweiten Anschlusspunkts der elektrischen Montageanordnung aufweist.

Etikettierte Leitungen sind bereits aus der DE 199 18 212 A1 bekannt. Allerdings werden hierin keine einseitig vorkonfektionierten Kabel mit Leitungsverbinder und Kennzeichnungsträger offenbart. Die vorliegenden vorkonfektionierten Leitungen ermöglichen in Weiterführung zu der Idee der DE 199 18 212 A1 einen noch schnelleren und einfacheren Anschluss von Leitungen in einer elektrischen Montageanordnung.

Nachfolgend wird die der Erfindung zugrundeliegende Problemstellung und die Erfindung selbst anhand eines Ausführungsbeispiels näher erläutert. Die Erfindung ist allerdings nicht auf das dargestellte Ausführungsbeispiel beschränkt. Insbesondere können auch einzelne im Ausführungsbeispiel genannte Merkmale in abgewandelter Form in weiteren Ausführungsvarianten übernommen werden. Es zeigen:
- Fig. 1: erfindungsgemäßes Kabel im teilweise vorkonfektionierten ausgelieferten Zustand;
- Fig. 2: Kabel der Fig. 1 nach dem Verbau;
- Fig. 3: Kabelüberstand nach dem Verbau des Kabels der Fig. 2;
- Fig. 4: Erstellen eines Kennzeichnungsträgers;
- Fig. 5: Zusammenbau einer Leitung;
- Fig. 6: Darstellung einer vollständig konfektionierten Leitung;
- Fig. 7: Darstellung einer an sich bekannten Lösung eines teilweise vorkonfektionierten Kabels;
- Fig. 8: Darstellung eines sich bei der bisherigen Konfektionierung ergebendes Problems;
- Fig. 9: Darstellung des Aufbaus einer neuartigen Vorrichtung zur Leitungslängenbestimmung mit welcher auch ein Auslesen von Kennzeichnungsinformationen erfolgen kann; und
- Fig. 9a: Darstellung eines Ausschnitts einer Transportrolle der Leitungsfördereinheit in Fig. 9 in der Betrachtung aus der Vorschubrichtung.

Diese eingangs anhand von Fig. 8 beschriebene Problemstellung lässt sich anhand der dargestellten Doppelbelegung grafisch darstellen.

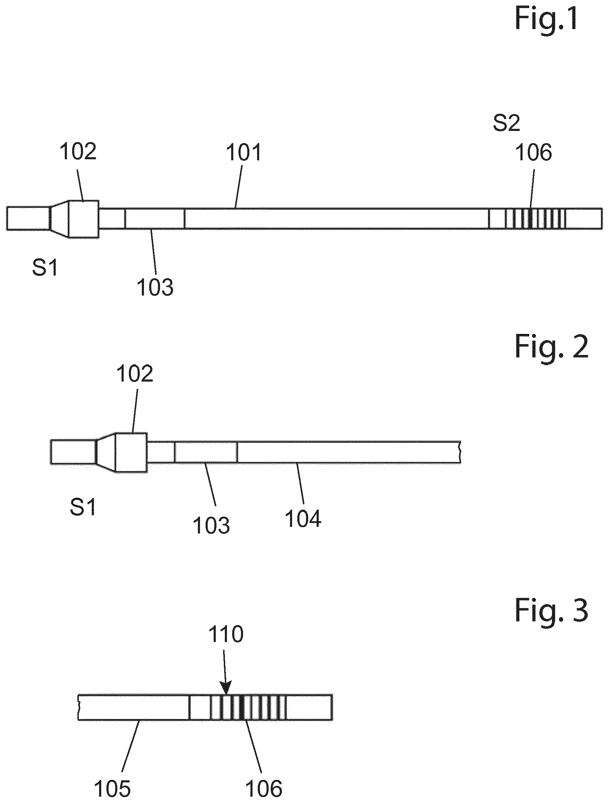

Die in Fig. 1 dargestellte erfindungsgemäß teilweise vorkonfektionierte Leitung 101 ist nur auf einer ersten Seite S1 konfektioniert.

Dies bedeutet im konkreten Fall des Ausführungsbeispiels der Fig. 1 und Fig. 2, dass der Werker eine Leitung zur Verfügung gestellt bekommt, die beispielsweise bereits einseitig einen Leitungsverbinder 102 trägt und bereits zumindest einen oder mehrere erste Kennzeichnungsträger 103 aufweisen, die dem Werker die Information über die richtige Verbindungsstelle in der elektrischen Montageanordnung geben.

Dabei ist die Leitung 101 bereits im richtigen Typ (z.B. Kabelquerschnitt) und in richtiger Farbe ausgeführt.

Die Leitung 101 selbst ist etwas zu lang zugeschnitten, z.B. auf ein vorbestimmtes Metermaß, in welchem die Leitung 101 ausgeliefert wird. Die konkrete Einkürzung der Leitung 101 erfolgt am Ort der Montage der Leitung.

Die zweite Seite S2 trägt, wie aus Fig. 1 und Fig. 3 erkennbar, noch keinen Leitungsverbinder und keinen Kennzeichnungsträger, da sie noch abgelängt werden muss.

In dieser Weise erfolgt in einem ersten Verfahrensschritt a) 100 das Bereitstellen der teilweise, insbesondere einseitig, vorkonfektionierten Leitung 101 durch Anlieferung an den Ort an welchem die zwei Anschlusspunkte der elektrischen Montageanordnung verdrahtet werden sollen.

Das Ablängen 200 erfolgt unter Ausbildung einer ersten Leitung 104, dem Restabschnitt, welches meist nur als Abfallprodukt angesehen wird, und unter Ausbildung einer zweiten Leitung 105, welche nunmehr die exakte Länge zur Installation in der elektrischen Montageanordnung aufweist.

Dabei würde ein Leitungsverbinder im Fall einer vollständig konfektionierten Leitung auf der zweiten Seite von der zu installierenden zweiten Leitung getrennt und würde sich an dem Restabschnitt, also der ersten Leitung, befinden. Gleiches würde im überwiegenden Fall auch für den Kennzeichnungsträger zutreffen.

Allerdings weist die zweite Seite der Leitung aus Schritt a) eine Kennzeichnung 106 auf, die an oder auf der Leitung angeordnet ist. Diese Kennzeichnung 106 umfasst Informationen zur Erstellung eines zweiten Kennzeichnungsträgers 107 zur Kennung eines zweiten der zwei Anschlusspunkte. Die Kennzeichnung 106 kann als Code 110 ausgebildet sein, welcher die Leitung 101 selbst oder den anzubringenden Kennzeichnungsträger 107 identifiziert.

Dabei genügt ausschließlich eine Kennzeichnung pro Leitung. Eine durchgehende insbesondere äquidistante Kennzeichnung verbunden mit einem hohen Druckaufwand, ist dabei nicht notwendig.

Die Kennzeichnung 106 kann z.B. ein Wickeletikett mit einem Barcode oder QR-Code sein.

Diese Kennzeichnung 106 kann sich nach dem Ablängen auf der ersten Leitung 104 befinden.

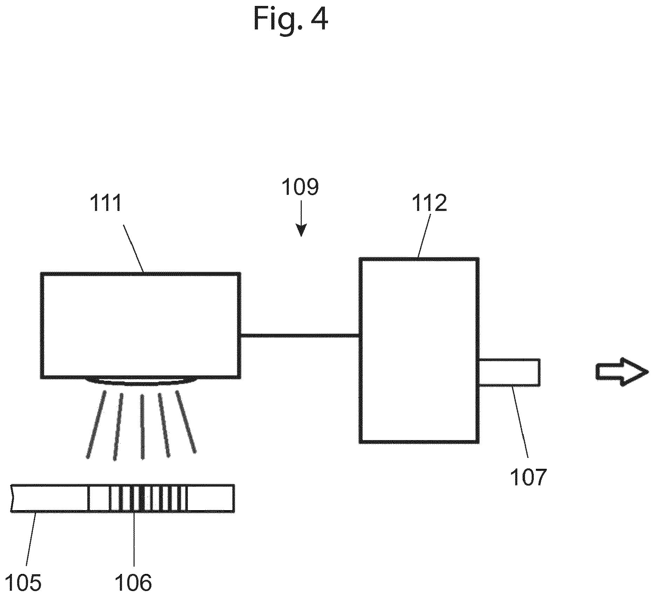

Anhand der Kennzeichnung kann ein Auslesen in einem Schritt c) 300 durch eine Auslesevorrichtung 109, umfassend z.B. einen Scanner 111 und einen Drucker 112, und Erstellen des zweiten Kennzeichnungsträgers 107 zur Kennung des zweiten Anschlusspunkts in der elektrischen Montageanordnung erfolgen. Dies ist in Fig. 4 dargestellt.

Die Auslesevorrichtung kann z.B. als eine Station ausgebildet sein, bei der ein Scanner den Code liest und ein Drucker die benötigte Kennung auf einem Kennzeichnungsträger bereitstellt.

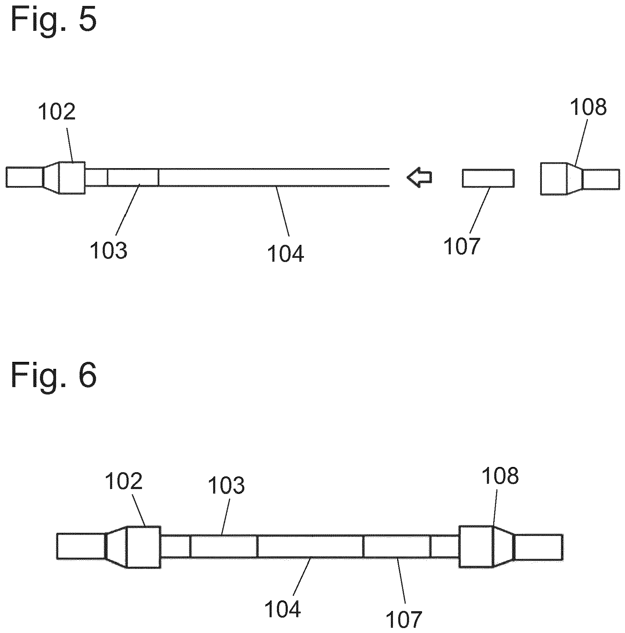

Der zweite Kennzeichnungsträger 107 wird auf die zweite Leitung 105 appliziert in einem Schritt d) 400. Gleiches gilt für einen zweiten Leitungsverbinder 108. Dies ist schematisch in Fig. 5 dargestellt.

Schließlich kann die in Fig. 6 dargestellte vollständig konfektionierte Leitung 105 in der elektrischen elektrischen Montageanordnung verbaut werden.

Das erfindungsgemäße Verfahren löst somit das Problem der Zuordnung eines Kennzeichnungsträgers zu einer Leitung, wenn die Leitung vor dem Verbau abgeschnitten werden muss und die zu verwendenden Kennzeichnungsträger nicht verschiebbar sind.

Die Aufgabe kann durch eine Vorrichtung zur Leitungslängenbestimmung, ein Verfahren zur Leitungslängenbestimmung, sowie eine elektrische Leitung gelöst werden.

Hinsichtlich des Verfahrens wird die Aufgabe durch ein Verfahren gelöst zur Leitungslängenbestimmung, wobei das Verfahren die Schritte umfasst:
Bestimmung, insbesondere messtechnisches Erfassen, einer Länge einer ersten abgelängten elektrischen Leitung, Bestimmung, insbesondere Auslesen, einer Kennung der ersten abgelängten elektrischen Leitung, und Bestimmung, insbesondere Berechnen, einer Länge einer zweiten elektrischen Leitung, die zur Installation in einer elektrischen Montageanordnung bestimmt ist, anhand der Länge der ersten abgelängten elektrischen Leitung und einer vermittels der Kennung bestimmten Ausgangslänge.

Im Unterschied zur WO 2015/142 151 A1 erfolgt lediglich ein einseitiges Ablängen, wobei die Längenmessvorrichtung lediglich zur Längenbestimmung der abgetrennten überschüssigen Kabelenden, welche eigentlich als Abfall betrachtet werden, genutzt wird.

Vorteilhafte Ausgestaltungsvarianten des Verfahrens sind Gegenstand der Unteransprüche.

Anhand der Kennung kann ein Leitungstyp der ersten elektrischen Leitung vorteilhaft bestimmt werden und anhand des Leitungstyps kann die Ausgangslänge bestimmt werden.

Das Verfahren kann ferner vorteilhaft einen oder mehrere der folgenden Schritte umfassen:
Ablängen wenigstens einer elektrischen Leitung auf eine Ausgangslänge, und/oder Zuordnen einer Kennung zu der Ausgangslänge, und/oder Speichern der Ausgangslänge und einer zugeordneten Kennung. Dies kann vorzugsweise werksseitig bei der Vorbereitung bzw. Vorkonfektionierung der Leitungssatzes, bzw. eines Kabelbündels, erfolgen.

Weiterhin kann das Verfahren den folgenden Schritt umfassen:
Kennzeichnen einer elektrischen Leitung mit einer der Kennung entsprechenden Kennzeichnung, welche Kennzeichnung vorzugsweise an der Oberfläche oder vorzugsweise auf der Oberfläche der Leitung angebracht wird.

Das Verfahren kann ferner den folgenden Schritt umfassen:
Ablängen der elektrischen Leitung zur Verkabelung der elektrischen Montageanordnung, wobei eine erste, überschüssige elektrische Leitung anfällt und wobei eine zweite, zur Verwendung in der elektrischen Montageanordnung bestimmte elektrische Leitung anfällt.

Das Verfahren kann zudem vorteilhaft zumindest einen der folgenden Schritte umfassen:
Erfassen der Kennzeichnung der ersten Leitung oder der zweiten Leitung, vorzugsweise vermittels einer Bilderkennung z.B. durch eine Kamera, und/oder Ermitteln einer Kennung anhand der erfassten Kennzeichnung.

Im diesem Schritt erfolgt das Bestimmen einer Gesamtlänge der Leitung. Hierzu wird u.a. der Leiteranfang messtechnisch, z.B. durch eine Lichtschranke, erfasst.

Weiterhin erfindungsgemäß ist ein Verfahren zum Herstellen eines ersten Satzes von elektrischen Leitungen, die jeweils mit wenigstens einer Kennzeichnung versehen sind, welchen Kennzeichnungen, bspw. anhand einer vermittels der Kennzeichnung ermittelbaren Kennung, jeweils eine Ausgangslänge zuordenbar ist und vorzugsweise Durchführen des vorgenannten erfindungsgemäßen Verfahrens für jede der elektrischen Leitungen des Satzes.

Das vorgenannte Verfahren kann zudem auch in einem erfindungsgemäßen Verfahren zur Herstellung eines zweiten Satzes von elektrischen Leitungen angewandt werden, wobei der erste Satz von elektrischen Leitungen nach dem vorgenannten Verfahren hergestellt wird und wobei der erste Satz für einen ersten Schaltschrank und der zweite Satz für einen zweiten Schaltschrank bestimmt sind, wobei bei der Herstellung des zweiten Satzes ein schaltschrankspezifischer Plan und/oder eine schaltschrankspezifische Dokumentation des ersten Schaltschranks mit einem schaltschrankspezifischen Plan und/oder einer schaltschrankspezifischen Dokumentation des zweiten Schaltschrankes verglichen werden und die Leitungen des zweiten Satzes, welche sowohl im ersten als auch im zweiten Schaltschrank identisch realisiert sind, vorkonfektioniert werden.

Vorteilhaft können die Leitungen, welche nicht identisch realisiert sind, im zweiten Satz mit einer Ausgangslänge enthalten sind oder entfallen.

Hinsichtlich der elektrischen Leitung wird die Aufgabe durch eine elektrische Leitung gelöst, wobei an der elektrischen Leitung eine Kennzeichnung angebracht ist, vermittels welcher Kennzeichnung eine Länge einer zweiten elektrischen Leitung, die zur Installation in der elektrischen Montageanordnung bestimmt ist, anhand der Länge der elektrischen Leitung und einer vermittels der Kennung bestimmten Ausgangslänge bestimmbar ist.

Vorteilhafte Ausgestaltungsvarianten der erfindungsgemäßen elektrischen Leitung sind Gegenstand der Unteransprüche

Anhand der Kennzeichnung der Leitung kann ein Leitungstyp, insbesondere eineindeutig, bspw. anhand einer vermittels der Kennzeichnung ermittelbaren Kennung, bestimmt werden.

Bei der Kennzeichnung auf der Oberfläche kann es sich vorteilhaft um einen, vorzugsweise codierten, Zeichensatz handeln, der vermittels einer Schrifterkennung lesbar ist. Alternativ oder zusätzlich können die Zeichen des Zeichensatzes derart ausgebildet sein, dass sie auf der gekrümmten Oberfläche der Leitung unterscheidbar sind.

Hinsichtlich der Vorrichtung wird die Aufgabe durch eine Vorrichtung zur Leitungslängenbestimmung gelöst, wobei die Vorrichtung eine Erkennungseinheit umfasst, die dazu dient, eine Kennung einer ersten elektrischen Leitung zu bestimmen, wobei die Vorrichtung ferner eine Längenmesseinheit, die dazu dient, eine Länge der ersten Leitung zu bestimmen, und wobei die Vorrichtung eine Speichereinheit umfasst, die operativ mit der Erkennungseinheit und der Längenmesseinheit verbunden ist, und die dazu dient, die Kennung und die Länge der ersten Leitung zu erfassen, insbesondere einander zuzuordnen.

Wichtig ist in diesem Kontext dass die Vorrichtung eine erste Detektionseinheit umfasst, welche vorzugsweise eine Lichtschranke umfassen kann, die dazu dient, das Einführen der ersten Leitung in die Vorrichtung zu bestimmen

Zusätzlich kann die erste Detektionseinheit dazu dient, einen Bezugspunkt für die Längenmessung zu bestimmen.

Die erste Detektionseinheit dient insbesondere zur Detektion eines Leitungsanfangs. Während typische Kabelablängvorrichtungen nach der Einführung des Kabels in die Vorrichtung ein Kabel zuschneiden und anschließend das Ablängen durch einen sogenannten Inkrementgeber erfolgt. Dabei ist diese bekannte Technologie nicht auf eine Detektion des Leitungsanfangs durch das Vorgeben des Leitungsanfangs durch das Zuschneiden nicht angewiesen. Zugleich kann eine Zuschneidevorrichtung bei der vorliegenden erfindungsgemäßen Vorrichtung vorteilhaft entfallen.

Die Vorrichtung kann eine zweite Detektionseinheit zur Detektion eines Leitungsendes aufweisen. Da die Vorrichtung zudem eine Leitungsfördereinheit zum Transport der Leitung durch die Vorrichtung aufweist, ist es notwendig, dass die Transporteinrichtung nach der Längenmessung gestoppt wird. Hierfür kann ein zweites Sensorelement zur Detektion des Leitungsendes vorgesehen sein, welche vorzugsweise zur Steuerung der Leitungsfördereinheit dient.

Die vorgenannte erste und/oder zweite Detektionseinheit kann jeweils als optische Sensoren, insbesondere als Lichtschranken, ausgebildet sein. Sie weisen in an sich bekannter Bauweise einen Sender zur Emission eines Lichtstrahls und einen Empfänger zur Detektion des Lichtstrahls auf.

Die Vorrichtung kann zudem eine Zuführvorrichtung zur Einführung und zum Transport von Leitungen mit unterschiedlichen Leiterdurchmessern aufweisen. Die Zuführung kann vorzugsweise entweder durch Umleiten der Leitung oder durch axiales Bewegen der Transportrolle und/oder der Transportrollen erfolgen.

Alternativ kann auch das Zählrad mit entsprechenden Laufbahnen ausgestattet sein oder es können mehrere Zählräder angeordnet sein.

Die Leitungsfördereinheit und die Längenmesseinheit können vorteilhaft auch in einer einzigen Transportrolle realisiert werden, welches zugleich auch als Zählrad ausgebildet sein kann. Als Gegenlager kann in diesem Fall beispielsweise eine rotierbare Rolle dienen.

Der Transport der Leitung in der Vorrichtung selbst kann vorteilhaft durch Verklemmen der Leitung zwischen der Längenmesseinheit, hier kann ebenfalls ein Inkrementgeber, auch Zählrad genannt, eingesetzt werden und der Transporteinrichtung, insbesondere der Transportrolle, erfolgen. Durch das Verklemmen und die Bewegung der Transportrolle erfolgt vorteilhaft der Transport der Leitung innerhalb der Vorrichtung.

Dabei kann die Transportrolle und/oder das Zählrad schräg, insbesondere senkrecht, zur Vorschubrichtung der Leitung verschiebbar sein, um Leitungen mit größerem Querschnitt aufzunehmen.

Weitere vorteilhafte Ausgestaltungen der erfindungsgemäßen Vorrichtung werden nachfolgend näher erläutert.

Vorteilhaft kann die Kennung dazu dienen, einen Leitungstyp aus einer Vielzahl von Leitungstypen elektrischer Leitungen zu bestimmen, wobei es sich bei den L Leitungstypen um verschiedene zur Verkabelung der elektrischen Montageanordnung vorgesehene elektrische Leitungen handelt.

Die Speichereinheit kann vorteilhaft dazu dienen, die Länge und die Kennung, bspw. eine Bezeichnung, wie bspw. Start- und/oder Zielanschlussbezeichnung, als Datenpaar zu speichern.

Vorteilhaft kann die Erkennungseinheit dazu dient, die Kennung anhand einer Kennzeichnung der ersten Leitung, mit der die erste Leitung gekennzeichnet ist, insbesondere eineindeutig identifizierbar ist, zu bestimmen,

Alternativ oder zusätzlich kann die Erkennungseinheit zur Bestimmung der Kennung bzw. des Leitungstyps eine Kennzeichnung der ersten Leitung vorgesehen sein, vorzugsweise durch optische Erfassen. Alternativ oder optional kann die erfasste Kennung auch einem Leitungstyp zugeordnet werden.

Die Vorrichtung kann ferner eine Leitungsförderungseinheit umfassen, die dazu dient, die erste Leitung entlang einer ersten Messstrecke für die Bestimmung der Kennung mittels der Erkennungseinheit zu führen und/oder sie kann dazu dienen, die erste Leitung entlang einer zweiten Messtrecke für die Bestimmung der Länge der ersten Leitung zu führen.

Die Vorrichtung kann ferner vorteilhaft eine Kommunikationseinheit umfassen, welche vorzugsweise mit der Speichereinheit operativ verbunden ist, und die dazu dient, die Kennung bzw. den Leitungstyp und die Länge der ersten Leitung, insbesondere an eine Ablängeinheit, zu übertragen.

Die Vorrichtung kann zudem ein, vorzugsweise handhaltbares, Gehäuse umfassen, in welchem die Erkennungseinheit, die Längenmesseinheit, die Speichereinheit, die Kommunikationseinheit und/oder die Leitungsförderungseinheit angeordnet sind.

In der Speichereinheit kann zudem eine der Kennung und/oder dem Leitungstyp zugeordnete Ausgangslänge der ersten Leitung z.B. als Datensatz hinterlegt sein, wobei die Ausgangslänge der Länge einer elektrischen Leitung vor einem Ablängschritt entspricht, bei welchem Ablängschritt die erste Leitung und eine zweite, zur Verwendung in der elektrischen Montageanordnung bestimmte Leitung anfallen.

Alternativ oder zusätzlich kann die Speichereinheit auch dazu dienen, anhand der Länge der ersten Leitung und einer Ausgangslänge eine Konfektionslänge, vorzugsweise durch Differenzbildung zwischen der Länge der ersten Leitung und der Ausgangslänge, zu bestimmen.

Als Bezugspunkt für die Längenmessung kann vermittels der Längenmesseinheit ein Ende der ersten Leitung dienen, welches Ende in die Vorrichtung eingeführt wird bzw. einführbar ist.

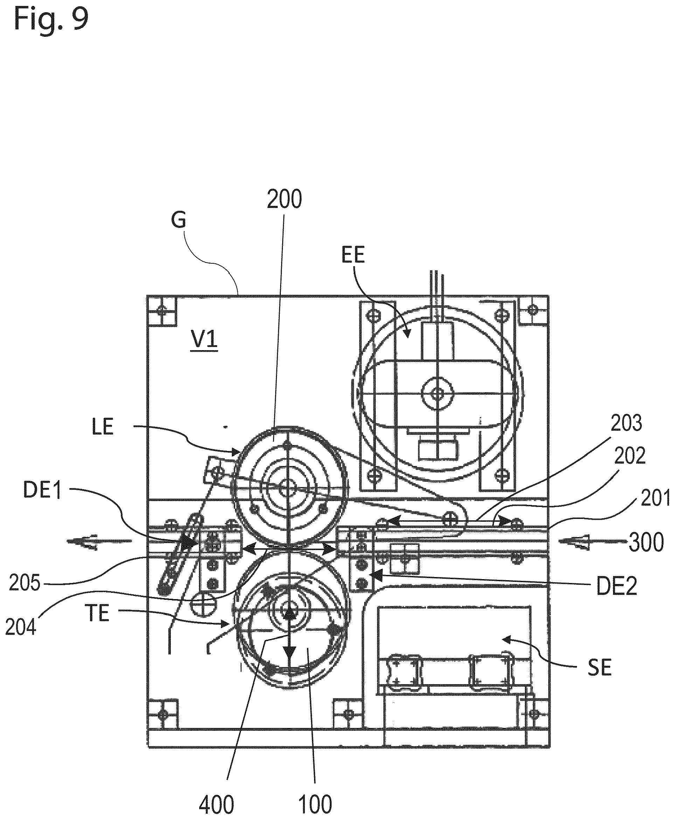

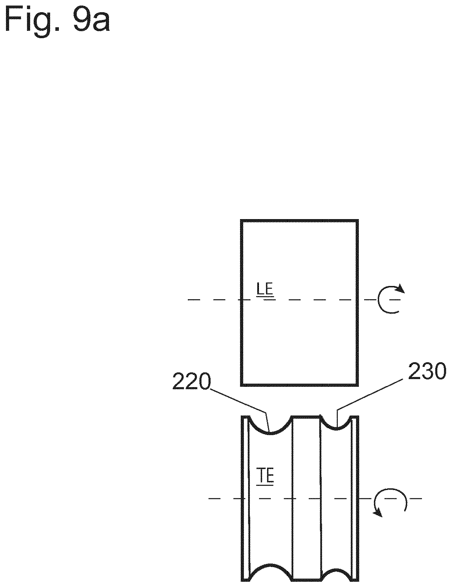

Fig. 9 zeigt eine Vorrichtung mit welcher ein Auslesen erfolgen kann.

Die Vorrichtung V1 kann aus einer oder mehrerer der vorgenannten Einheiten bestehen, und insbesondere keine Ablängeinheit zum Ablängen einer elektrischen Leitung, aufweisen.

Die Vorrichtung V1 weist einen Eingang 201 zum Einführen einer elektrischen Leitung L1 auf. Im Bereich des Eingangs 201 ist zumindest ein erster Kabelkanal 202 angeordnet, welcher zur Führung der Leitung L1 innerhalb der Vorrichtung V1 vorgesehen ist. Die Leitung L1 wird über einen Ausgang 205 auf einer zum Eingang 201 gegenüberliegenden Seite der Vorrichtung V1 ausgeführt.

Entlang des ersten Kabelkanals 201 kann eine erste Messtrecke 203 für die Bestimmung der Kennung mittels der Erkennungseinheit EE vorgesehen sein. Ferner ist innerhalb der Vorrichtung V1 eine zweite Messstrecke 204 für die Bestimmung der Länge l1 der ersten Leitung L1 vorgesehen. Diese Messtrecken 203 und 204 sind dabei hintereinander angeordnet. Dabei wird vermittels einer optischen Erfassung insbesondere durch eine als Photokamera ausgebildete Erkennungseinheit EE, die senkrecht zum Kabelkanal angeordnet ist, eine Kennzeichnung KX der Leitung L1 erfasst.

Die wenigstens teilweise in die Vorrichtung V1 eingeführte Leitung L1 wird über eine Leitungsfördereinheit TE in einer Vorschubrichtung 300 vom Eingang 201 zum Ausgang 205 gefördert.

Die in Fig. 9 dargestellte Leitungsfördereinheit 5 weist eine oder mehrere erste Rollen 100 und eine oder mehrere zweite Rollen 200 auf. Im Beispiel der Fig. 9 ist die erste Rolle 100 im Förderbetrieb in Gravitationsrichtung unterhalb der Leitung L1 angeordnet. Sie ist motorbetrieben und dient dem Vorschub der Leitung innerhalb der Vorrichtung V1.

Die Rolle 100 kann auch als Transportrolle bezeichnet werden. Sie kann senkrecht oder schräg zur Vorschubrichtung 300 der Leitung L1 beweglich, insbesondere federnd gelagert sein, so dass die Leitung L1 mit einem bestimmten Anpressdruck gegen die zweite Rolle 200 gedrückt wird.

Die zweite Rolle 200 kann als Lagerrolle ausgebildet sein, welche sich mitdreht.

Selbstverständlich können die Rollen 100 und 200 auch in ihrer Funktion vertauscht in der Vorrichtung vorliegend, so dass die zweite Rolle 200 motorbetriebene Transportrolle. Zudem kann auch zweite Rolle 200 sowohl als Lagerrolle als auch als Transportrolle senkrecht oder schräg zur Vorschubrichtung 300 der Leitung L1 beweglich, insbesondere federnd gelagert sein.

Eine der beiden Rollen 100 oder 200 kann als ein sogenanntes Zählrades, auch als Inkrementalgeber bekannt, als Teil einer Längenmesseinheit LE ausgebildet sein.

Wie zuvor beschrieben kann vermittels einer als Längenmessung bspw. über die Drehung der Rollen 100, 200 die Länge l1 der Leitung L1 bestimmt werden. Sowohl die Längenmesseinheit LE als auch die Erkennungseinheit EE sind mit einer Speichereinheit SE verbunden, in der die jeweiligen Ergebnisse der Längenmessung und der Erkennungseinheit EE abgespeichert werden.

Um eine möglichst präzise Längenmessung zu erhalten, ist zudem zur Ermittlung eines Bezugspunkts für die Längenmessung eine erste Detektionseinheit DE1 vorgesehen, mittels welcher ein Leitungsanfang erkannt werden kann. Wird eine Leitung L1 am Detektionspunkt erkannt, kann ein Offset zur vermittels der Längenmesseinheit LE ermittelten Länge addiert werden und diese korrigierte Länge zusammen mit der Kennung der Leitung L1 in der Speichereinheit SE gespeichert werden.

Ferner weist die Vorrichtung V1 ein Gehäuse G auf, in dem die Erkennungseinheit EE, die Längenmesseinheit LE, die Detektionseinheit DE1 und die Speichereinheit SE angeordnet sind.

Die Längenmesseinheit LE kann vorzugsweise als ein Inkrementgeber in Form eines Zählrades ausgebildet sein.

Die Vorrichtung weist zudem eine zweite Detektionseinheit DE2 zur Detektion eines Leitungsendes aufweisen.

Durch die bewegliche Lagerung der Rollen 100 und 200 kann ein Klemmmechanismus, z.B. durch Federn oder dergleichen, realisiert sein, welche die Transportrolle 100 gegen die Lagerrolle 200 pressen, wobei die Leitung zwischen der Transportrolle 100 und der Lagerrolle 200 verpresst bzw. verklemmt vorliegt. Durch den Anpressdruck und die Rotation der Transportrolle 100 kann eine Weiterbewegung der Leitung in Vorschubrichtung 300 erfolgen und durch die Funktionalität des Zählrades der Transport- oder der Lagerrolle 100, 200 erfolgt die Längenmessung.

Es ist daher vorteilhaft, wenn die Transportrolle und/oder das Zählrad schräg, insbesondere senkrecht, zur Vorschubrichtung der Leitung insbesondere unter Ausbildung einer Rückstellkraft verschiebbar (siehe Bezugszeichen 400) ausgebildet ist, um Leitungen mit größerem Querschnitt aufzunehmen. Die Verschiebbarkeit kann beispielsweise durch eine federnde Lagerung erreicht werden.

Die vorgenannte zweite Detektionseinheit DE2 ist vorgesehen, damit die Leitungsfördereinheit bzw. Transporteinheit TE nach der Längenmessung der Leitung L1 automatisch stoppt. Auch bei dieser zweiten Detektionseinheit DE2 kann es sich um eine Lichtschranke handeln, es können allerdings auch andere Varianten zur Ermittlung des Leitungsendes, z.B. ein Sensor zur Ermittlung des Anpressdrucks der Transportrolle oder dergleichen, vorgesehen sein.

Die Vorrichtung kann zudem eine Zuführvorrichtung zur Einführung und zum Transport von Leitungen mit unterschiedlichen Leiterdurchmessern aufweisen. Die Zuführvorrichtung kann teilweise in der Erkennungseinheit EE implementiert sein.

Weiterhin weist die Transportrolle 100 der Transporteinheit TE oder wahlweise die Lagerrolle 200 zumindest zwei Laufbahnen 220, 230 mit unterschiedlicher Rillentiefe und/oder Rillenbreite auf. Die Transport- und Lagerrolle 100, 200 ist in Fig. 9 lediglich in der Seitendarstellung abgebildet, wobei die Lagerrolle 200 in Fig. 8 und 9 als Inkrementgeber ausgebildet ist und somit auch Teil der Längenmesseinheit LE ist.

Alternativ können auch zumindest zwei Transportrollen oder Lagerrollen 100, 200 mit jeweils nur einer Laufbahn, vorzugsweise achsparallel zueinander, vorgesehen sein. Dabei weisen die Laufbahnen zueinander unterschiedliche Rillentiefen und/oder Rillenbreiten auf.

Nach der Ermittlung eines Leitungsdurchmessers oder einer davon abhängigen Größe. z.B. dem Leitungsquerschnitt, kann eine Umlenkung der Leitung z.B. durch Umlenkung des Kabelkanals 202 und/oder der Transportrolle(n) und/oder des Lagerrolle(n) erfolgen, so dass die Leitung der Laufbahn zugeordnet wird, welche am ehesten bezogen auf die Rillentiefe und/oder Rillenbreite, zur Führung der Leitung L1 in der Vorrichtung geeignet ist.

Nach einem Erfassen des Leiterquerschnitts kann somit die Zuordnung der Laufbahn in Abhängigkeit von dem erfassten Leiterquerschnitt erfolgen.

Laufbahnen mit zu großer Rillenweite würden das Verklemmen einer Leitung mit kleinem Leitungsdurchmesser erschweren. Demgegenüber können Leitungen mit zu großem Leitungsquerschnitt seitlich aus der durch die Laufbahn vorgegebenen Führung der Leitungen rutschen.

In einer bevorzugten Ausführungsvariante der Erfindung umfasst die Kennzeichnung KX eine Kennung hinsichtlich des Leitungsdurchmessers, so dass die Ermittlung des Leitungsdurchmessers durch Auslesen der Kennung erfolgen kann.

## Patentansprüche

1. Verfahren zur Verdrahtung zweier Anschlusspunkte einer elektrischen Montageanordnung, **gekennzeichnet durch die folgenden Schritte:**
a) Bereitstellen (100), insbesondere Anlieferung an den Ort an welchem die zwei Anschlusspunkte der elektrischen Montageanordnung verdrahtet werden sollen, einer teilweise vorkonfektionierten Leitung (101) umfassend
die Leitung (101), sowie
einen ersten Kennzeichnungsträger (103) zur Kennung eines ersten von zwei Anschlusspunkten;
eine Kennzeichnung (106) an oder auf der Leitung (101) umfassend Informationen zur Erstellung eines zweiten Kennzeichnungsträgers (107) zur Kennung eines zweiten der zwei Anschlusspunkte und/oder zur Zuordnung eines passenden Leitungsverbinders;
b) Ablängen (200) der teilweise vorkonfektionierten Leitung (101), unter Ausbildung einer ersten elektrischen Leitung (104) und einer zweiten elektrischen Leitung (105) zur Anordnung in der elektrischen Montageanordnung;
c) Auslesen (300) der Informationen der Kennzeichnung (106) durch eine Auslesevorrichtung (109) und
c1 Erstellen des zweiten Kennzeichnungsträgers (107) zur Kennung des zweiten Anschlusspunkts und/oder
c2 Versehen der zweiten Leitung (105) mit einem durch die Kennzeichnung (106) vorgegebenen Leitungsverbinder;
d) Applikation (400) des zweiten Kennzeichnungsträgers (107) an oder auf die zweite elektrische Leitung (105) zur Anordnung in der elektrischen Montageanordnung.

2. Verfahren nach Anspruch 1, **dadurch gekennzeichnet, dass** die in Schritt a) bereitgestellte teilweise vorkonfektionierte Leitung (101) an einem ersten Ende (S1), insbesondere im Bereich des ersten Kennzeichnungsträger (103) zur Kennung des ersten von zwei Anschlusspunkten in der elektrischen Montageanordnung, einen Leitungsverbinder (102) aufweist.

3. Verfahren nach Anspruch 1 oder 2, **dadurch gekennzeichnet, dass** die erste elektrische Leitung (104) nach dem Ablängen die Kennzeichnung (106) trägt.

4. Verfahren nach Anspruch 1 oder 2, **dadurch gekennzeichnet, dass** die Kennzeichnung (106) umfassend die Informationen zur Erstellung des zweiten Kennzeichnungsträgers (107) zur Kennung des zweiten der zwei Anschlusspunkte auf einem Wickeletikett angeordnet ist.

5. Verfahren nach einem der vorhergehenden Ansprüche, **dadurch gekennzeichnet, dass** ausschließlich eine Kennzeichnung (106) pro Leitung vorgesehen ist.

6. Verfahren nach einem der vorhergehenden Ansprüche, **dadurch gekennzeichnet, dass** die Kennzeichnung (106) umfassend Informationen zur Erstellung des zweiten Kennzeichnungsträgers (107) zur Kennung des zweiten der zwei Anschlusspunkte als ein Barcode und/oder einem QR-Code ausgebildet ist.

7. Verfahren nach einem der vorhergehenden Ansprüche, **dadurch gekennzeichnet, dass** nach Schritt b), insbesondere nach Schritt d), eine Applikation eines zweiten Leitungsverbinders (108), insbesondere eines Stecker, einer Aderendhülse und/oder eines Kabelschuhs, erfolgt.

8. Verfahren nach einem der vorhergehenden Ansprüche, **dadurch gekennzeichnet, dass** das Auslesen der Kennzeichnung (106) durch einen berührungslosen Scan, vorzugsweise einem optischen Scan, erfolgt.

9. Verfahren nach einem der vorhergehenden Ansprüche, **dadurch gekennzeichnet, dass** zumindest einer der beiden Kennzeichnungsträger (103, 107) Informationen hinsichtlich eines Leitungstyps, eines Querschnitts und/oder einer Farbe der Leitung (105) aufweist.

10. Verfahren nach einem der vorhergehenden Ansprüche, **dadurch gekennzeichnet, dass** nach dem Auslesen der Informationen gemäß Schritt c) in Schritt c2) eine Information zu dem zu verwendendenden zweiten Leitungsverbinder (108) durch die Auslesevorrichtung (109) an einen Nutzer ausgegeben wird.

11. Teilweise vorkonfektionierte elektrische Leitung (101), insbesondere zur Verwendung in einem Verfahren gemäß einem der vorhergehenden Ansprüche, wobei die teilweise vorkonfektionierte Leitung (101) an einem ersten Ende (S1) einen Leitungsverbinder (102) zur Verbindung mit einem ersten Anschlusspunkt einer elektrischen Montageanordnung aufweist und an einem zweiten Ende keinen Leitungsverbinder aufweist, **dadurch gekennzeichnet, dass** die Leitung (101) in einem Endbereich des zweiten Endes eine Kennzeichnung (106) umfassend Informationen zur Erstellung eines zweiten Kennzeichnungsträgers (107) zur Kennung eines zweiten Anschlusspunkts der elektrischen Montageanordnung aufweist.

12. Verwendung eines Bündels von mehreren teilweise vorkonfektionierten elektrischen Leitungen (101), gemäß Anspruch 11, zur Verdrahtung einer elektrischen Montageanordnung, insbesondere eines Schaltschrankes.
